# EUROPÄISCHE PATENTANMELDUNG

(11) **EP 2 719 948 A1**
(43) Veröffentlichungstag der Anmeldung: **16.04.2014**
(21) Anmeldenummer: 12008425.6
(22) Anmeldetag: 19.12.2012
(51) Int. Cl.: F23D 1/00, F23D 17/00

(54) **Brenner**

(30) Priorität: 11.10.2012 DE 102012019912
(71) Anmelder: Linde Aktiengesellschaft, 80331 München (DE)
(72) Erfinder: Niehoff, Thomas Dr.,, 85229 Markt Indersdorf (DE); Schemberg, Siegfried, 96479 Weitramsdorf (DE)
(74) Vertreter: Kasseckert, Rainer

(57) **Zusammenfassung**

Die Erfindung betrifft einen Brenner, der zur Befeuerung mit wenigstens einem Sekundärbrennstoffstrom eingerichtet ist, und wenigstens eine Sekundärbrennstoffleitung (2, 3) mit einem ersten Ende (2', 3") und einem zweiten Ende (2", 3") aufweist, wobei an dem ersten Ende (2', 3') der Sekundärbrennstoffstrom in die Sekundärbrennstoffleitung (2, 3) eintritt, und an dem zweiten Ende (2", 3") der Sekundärbrennstoffstrom in eine Brennkammer austritt,
dadurch gekennzeichnet, dass in oder an der Sekundärbrennstoffleitung (2, 3) wenigstens eine Leitung (2a, 3a) zum Transport von Brenngas, insbesondere Luft, Sauerstoff oder sauerstoffangereichter Luft ausgebildet ist, welche im Bereich des zweiten Endes (2", 3") der Sekundärbrennstoffleitung (2, 3) wenigstens eine Öffnung aufweist, über welche Brenngas in die Brennkammer einbringbar ist.

## Beschreibung

Die Erfindung betrifft einen Brenner, insbesondere zum Sintern von Rohmehl zu Zementklinker, für einen Drehrohrofen.

### Stand der Technik

Zementklinker ist ein Zwischenprodukt bei der Zementherstellung und wird durch Sintern von natürlichen oder sekundären Rohstoffen hergestellt. Hierzu wird üblicherweise ein Drehrohrofen verwendet. Um 1 t Portlandzementklinker zu erzeugen, werden ca. 1,6 t an Rohstoffen benötigt. Natürliche Rohstoffe sind vor allem Kalkstein, Ton oder Mergel, die bergmännisch in Steinbrüchen oder Tongruben abgebaut werden. Als sekundäre Rohstoffe können Gießereialtsande, Hochofenschlacken und dergleichen eingesetzt werden. Üblicherweise beträgt das Verhältnis der Rohstoffe ca. ¾ Kalkstein zu ¼ Ton. Die wesentlichen Parameter zur Beschreibung des Rohmaterials sind üblicherweise der Kalkstandard, der Silikatmodul und der Tonerdemodul.

Das fertig gemischte Rohmaterial (sogenanntes Rohgranulat) wird in einer Mahltrockenanlage im Verbundbetrieb mit heißem Abgas des Drehrohrofens getrocknet und zu sogenanntem Rohmehl gemahlen. Das Rohmehl wird in Silos zwischengelagert. Im sogenannten Direktbetrieb, bei dem keine Abgasverwertung in der Mahltrocknung erfolgt, wird das Abgas hingegen in Verdampfungskühlern abgekühlt. Die abschließende Entstaubung des abgekühlten Ofenabgases erfolgt in beiden Fällen durch Elektrofilter.

Das Rohmehl wird in eine Vorwärmeranlage, üblicherweise einen Zyklonvorwärmer, eingebracht und dort, meist ebenfalls mittels Ofenabgas, erwärmt. Das Rohmehl durchwandert dabei die gesamte Vorwärmeranlage im Gegenstrom zum Ofenabgas. Dabei wird das Rohmehl von ca. 50°C auf 800°C erwärmt, das Ofenabgas von ca. 1.100°C auf 350°C abgekühlt. Beim Erwärmen des Rohmehls erfolgt ab ca. 600°C eine teilweise Kalzination (Zersetzung, Entsäuerung) von Kalkstein bis zu ca. 20%. Aus CaCO₃ bildet sich hierbei CaO + CO₂. Durch einen sogenannten Kalzinator am Ofeneinlauf läßt sich eine Entsäuerung von bis zu 90% erzielen.

Die noch fehlende Kalzination erfolgt im Drehrohr des Drehrohrofens. Das Rohmehl gelangt dabei am Ofeneinlauf in das Drehrohr und wird unter ständiger Wärmezufuhr erwärmt. Dabei kommt es zu unterschiedlichen chemisch-physikalischen Vorgängen, die letztendlich dazu führen, daß aus dem Rohmehl die gewünschten Klinkermineralien gesintert werden.

Unter Verwendung eines Brenners wird der Klinker im Drehrohrofen auf eine Temperatur von ca. 1.450°C und mehr erhitzt, wofür eine Primärflammentemperatur von ca. 2.000°C erforderlich ist. Die Kühlung im Drehrohr nach der Sinterung muß rasch erfolgen, um ein Zerfallen der Klinkerphasen zu verhindern. Der aus dem Drehrohr ausgetragene Klinker wird anschließend durch Luftzufuhr in Kühlern (z.B. Rostkühlern) weiter abgekühlt. Die heiße Kühlerluft wird üblicherweise als Sekundär- oder Tertiärluft zur Feuerung im Drehrohrofen verwendet und koaxial zum Brennerkopf eingebracht.

Die Klinkerherstellung ist ein sehr energieintensiver Prozess. Die Erzeugung von einer Tonne Klinker bedingt einen spezifischen Wärmeverbrauch von rund 3.500 MJ. Als sogenannte Primär- oder Regelbrennstoffe werden dabei neben Steinkohle und schwerem Heizöl auch Braunkohle, Petrolkoks, Erdgas oder leichtes Heizöl eingesetzt.

Neben den Regelbrennstoffen setzt die Zementindustrie in den letzten Jahren immer mehr auf sogenannte Sekundär- oder Ersatzbrennstoffe. Hierunter werden Energieträger verstanden, die in industriellen Prozessen oder im kommunalen Bereich als Abfälle anfallen, wie beispielsweise Altreifen, Kunststoffabfälle, Altöle, Lösungsmittel, Tiermehl oder Papierfaserreststoffe. Sekundärbrennstoffe (z.B. Altreifen) können entweder durch geeignete Öffnungen direkt in den Drehrohrofen eingebracht oder, ggf. zerkleinert, neben dem Primärbrennstoff einem entsprechend ausgelegten Brenner zugeführt werden. Die parallele Verwendung mehrerer Sekundärbrennstoffe, auch in unterschiedlichen Aggregatzuständen, ist üblich.

Beim Einsatz von Sekundärbrennstoffen muss unter anderem gewährleistet sein, dass die Qualität und die Gleichmäßigkeit des Produktes Zement sowie die Sicherheit der Prozeßführung nicht beeinträchtigt wird.

Der Einsatz von Sekundärbrennstoffen in Brennern bewirkt jedoch bisweilen beträchtliche Schwankungen bei der Klinkerleistung und eine instabile Verbrennung. Bei einer Erhöhung des Anteils an Sekundärbrennstoffen kann eine Abschaltung des Brenners notwendig werden, wodurch ggf. anschließend ein mehrstündiger Anfahrprozess durchgeführt werden muss.

Es besteht daher der Bedarf nach verbesserten Möglichkeiten zur Herstellung von Zementklinker unter Einsatz von Sekundärbrennstoffen.

### Offenbarung der Erfindung

Die vorliegende Erfindung schlägt zu diesem Zweck einen Brenner mit den Merkmalen des Patentanspruchs 1 sowie einen Drehrohrofen mit den Merkmalen des Patentanspruchs 9 vor.

Für Drehrohröfen verwendete Brenner weisen typischerweise externe Zuleitungen auf, mittels derer der Brenner an entsprechende Fördereinrichtungen, Gebläse, Tanks und dergleichen angeschlossen ist. Ferner sind im Brenner Kanäle vorgesehen, in denen z.B. Brennstoff oder Brenngas, wie z. B. Luft oder Sauerstoff in die Brennzone transportiert wird. Der Begriff "Sekundärbrennstoffleitung" umfasst dabei im Rahmen dieser Anmeldung ein extern des Brenners angeordnetes Anschlussrohr (also eine Zuleitung), aber auch einen innerhalb des Brenners angeordneten Kanal.

Mittels des erfindungsgemäßen Brenners lässt sich eine bessere und intensivere Vermischung eines Sekundärbrennstoffstromes mit einem Brenngas erzielen. Insbesondere kann der entstehende Ausbrand verbessert bzw. minimiert werden, wodurch Qualitätseinbußen beim Einsatz von Sekundärbrennstoffen vermieden werden können.

Gegenüber herkömmlichen Lösungen ist aufgrund dieser besseren Vermischung der Anteil an in einem Drehrohrofen verwendbaren Sekundärbrennstoffen steigerbar, wodurch weniger fossile Brennstoffe benötigt werden. Insbesondere kann somit die CO2-Emission aufgrund der Verbrennung fossiler Brennstoffe gesenkt werden.

Eine durch die Erfindung zur Verfügung gestellte Erhöhung des thermischen Wirkungsgrades aufgrund der effizienteren Verbrennung führt insgesamt zu geringeren CO2-Emissionen sowie zu einem geringeren Brennstoffeinsatz. Erfindungsgemäß kann auch die Verbrennungsluftmenge reduziert werden, womit Einsparungen von elektrischer Energie zum Betrieb von entsprechenden Gebläsen möglich sind.

Die Verwendung des erfindungsgemäßen Brenners ermöglicht eine effektive Erhöhung der Luftvorwärmtemperatur, und damit eine weitere Steigerung des thermischen Wirkungsgrades eines Brenners bzw. Drehrohrofens insgesamt.

Die vorliegende Erfindung ermöglicht gegenüber herkömmlichen Lösungen eine Stabilisierung der Verbrennung, eine einfache Beeinflussung der Flammenlänge im Brenner sowie eine Steigerung der Produktionsleistung.

Mit einem erfindungsgemäßen Brenner kann auch die Bandbreite einsetzbarer Sekundärbrennstoffe vergrößert werden, da bestimmte Sekundärbrennstoffe aufgrund ihrer ungünstigen Zusammensetzung bzw. physikalischer Eigenschaften bislang nicht verwendbar waren, und nun eingesetzt werden können.

Der erfindungsgemäße Brenner ist bei beliebigen Ofensystemen mit Einsatz von Sekundärbrennstoffen einsetzbar. Als weitere mögliche Einsatzgebiete seien genannt Kraftwerke mit Sekundärbrennstoff-Brennersystemen und Anlagen zur Vergasung von Biomasse oder Sekundärbrennstoffen.

Vorteilhafte Ausgestaltungen der Erfindung sind Gegenstand der Unteransprüche.

Wenn im Folgenden von erstem und zweitem Ende des Brenners bzw. der Leitungen die Rede ist, werden unter "erstem Ende " die jeweiligen Eingangsseiten, und unter "zweitem Ende" die jeweiligen Ausgangsseiten verstanden. Die Brennkammer ist somit an den jeweils zweiten Enden vorgesehen.

Zweckmäßigerweise sind das zweite Ende der wenigstens einen Brennstoffleitung und der wenigstens einen Leitung zum Transport von Brenngas (welche beide in der Brennkammer münden) so ausgebildet, dass Brenngas (erst) im Brennraum in direkten Kontakt mit dem Sekundärbrennstoff gebracht wird. Hiermit ist eine optimale und flexible Zudosierung von Brenngas zu einem gegebenen Sekundärbrennstoff bereitstellbar.

Besonders bevorzugt ist, dass das zweite Ende der wenigstens einen Brenngasleitung als Öffnung als Düse oder Schlitz oder Ringspalt, welche bzw. welcher insbesondere in der der Brennkammer zugewandten Stirnseite der wenigstens einen Sekundärbrennstoffleitung vorgesehen ist, ausgebildet ist. Mit dieser Maßnahme ist eine besonders intensive Vermischung von Sekundärbrennstoff und Brenngas erzielbar.

Vorteilhafterweise ist das zweite Ende der wenigstens einen Brenngasleitung so ausgerichtet, dass ein aus ihr austretender Brenngasstrom tangential oder radial verdrallt bezüglich der Richtung des aus dem zweiten Ende der Sekundärbrennstoffleitung in die Brennkammer austretenden Brennstoffstromes ist.

Zweckmäßigerweise ist das zweite Ende der wenigstens einen Brenngasleitung als Düse zur Bereitstellung einer Austrittsgeschwindigkeit für Brenngas, insbesondere Sauerstoff im Bereich von 20 m/s bis 600 m/s, vorzugsweise 100 m/s bis 300 m/s, mit tangentialer Ausrichtung zum Brennstoffstrom und/oder unter einem Winkel von bis zu 30° in Richtung des Brennstoffstroms geneigt, und/oder radial um bis zu 45° zum Brennstoffstrom gedreht ausgebildet. Mit diesen Bemaßungen bzw. Ausrichtungen sind besonders effektive Durchmischungen von Brenngas und Sekundärbrennstoff möglich.

Es ist ebenfalls bevorzugt, dass das zweite Ende der wenigstens einen Brenngasleitung mit Düsen in Schlitzform mit Austrittsgeschwindigkeiten für Brenngas, insbesondere Sauerstoff im Bereich von 20 m/s bis 300 m/s, vorzugsweise im Bereich 30 m/s bis 100 m/s mit tangentialer Ausrichtung zum Brennstoffstrom, oder mit zusätzlich um bis zu 30° nach innen geneigter und/oder radialer Austrittsrichtung zur Erzeugung eines Dralls des Brenngasstroms ausgebildet ist.

Gemäß einer weiteren bevorzugten Ausführungsform ist das zweite Ende der wenigstens einen Brenngasleitung als Ringspalt, welcher die wenigstens eine Sekundärbrennstoffleitung koaxial wenigstens teilweise, insbesondere vollständig umgibt, zur Bereitstellung von Austrittsgeschwindigkeiten für Brenngas im Bereich von 10 m/s bis 100 m/s, vorzugsweise im Bereich von 20 m/s bis 60 m/s ausgebildet.

Es ist weiter bevorzugt, dass das zweite Ende der wenigstens einen Brenngasleitung im Bodenbereich der Sekundärbrennstoffleitung ausgebildet ist. Mit dieser Maßnahme können Trageffekte ausgenutzt werden, wobei insbesondere das eingedüste Brenngas als "Tragluft" verwendet werden kann, wodurch die Flugbahn der Sekundärbrennstoffe im Ofen verlängert wird. Hierdurch wird auch die Verweilzeit von Feststoffpartikeln in der Brennerflamme verlängert, und somit der Ausbrand verbessert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnung ausführlich beschrieben.

### Figurenbeschreibung

- Figur 1: zeigt eine Anlage zur Herstellung von Zement in schematischer Darstellung, mit welcher ein erfindungsgemäßer Brenner verwendbar ist, und
- Figuren 2a, 2b: zeigen eine bevorzugte Ausführungsform eines erfindungsgemäßen Brenners für einen Drehrohrofen in schematischer Darstellung, in einer perspektivischen bzw. einer geschnittenen Ansicht.

In den Figuren sind gleiche oder gleichwirkende Komponenten mit identischen Bezugszeichen angegeben, auf eine wiederholte Erläuterung wird der Übersichtlichkeit halber verzichtet.

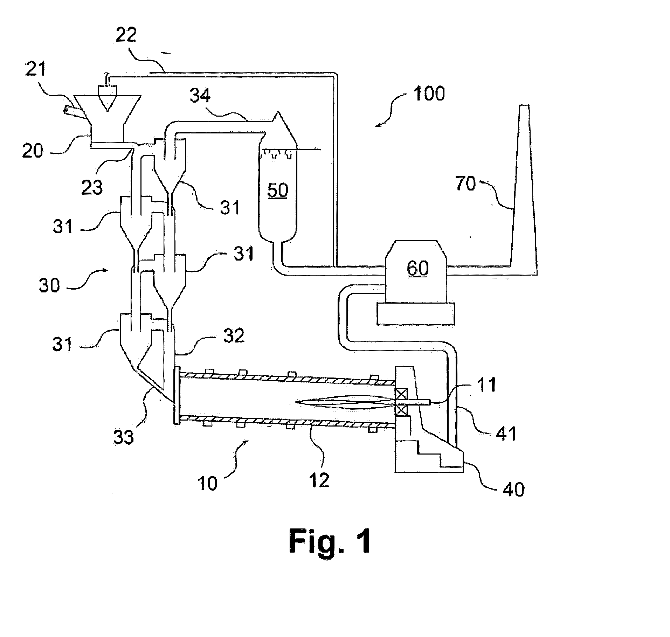

In Figur 1 ist eine Anlage zur Herstellung von Zement, insbesondere zur Herstellung von sogenanntem "grauem" Zement, schematisch dargestellt und insgesamt mit 100 bezeichnet. Bei der Anlage 100, die erfindungsgemäß arbeiten kann, handelt es sich um eine Drehofenanlage mit einem Drehrohr- bzw. Drehofen 10.

Die Anlage verfügt über eine Mahleinheit 20 in Form einer sogenannten Rohmühle, der über eine Einfüllöffnung 21 kontinuierlich Rohgranulat, z.B. gebrochener Kalkstein und Ton, zugeführt wird. Die Mahleinheit 20 ist, wie eingangs erläutert, zur Mahltrocknung ausgebildet, wobei im sogenannten Verbundbetrieb zur Trocknung ein erwärmter Luftstrom über eine Leitung 22 zugeführt werden kann. Ein Mahlwerk der Mahleinheit 20 ist der Übersichtlichkeit halber nicht dargestellt.

In der Mahleinheit 20 erzeugtes Rohmehl gelangt, ggf. nach Zwischenlagerung in nicht dargestellten Tanks, über eine Leitung 23 in eine Vorwärmeinheit 30, die im Beispiel als Zyklonvorwärmer mit einer Anzahl Vorwärmstufen 31 ausgebildet ist. Die Anzahl der Vorwärmstufen 31 ist nicht beschränkt und beträgt typischerweise sechs. In der Vorwärmeinheit 30 wird das über die Leitung 22 zugeführte Rohmehl mittels Ofenabgas aus dem Drehrohrofen 10, das über eine Leitung 32 zugeführt wird, im eingangs erwähnten Umfang vorgewärmt. Das vorgewärmte Rohmehl wird über eine Leitung 33 dem Drehofen 10 zugeführt. Ein Vorkalzinator kann vorgesehen sein, ist jedoch nicht dargestellt. Abluft wird über eine Abluftleitung 34 abgeführt.

Der Drehofen 10 verfügt über ein mittels eines Brenners 11 von seinem unteren Ende aus beheiztes, leicht geneigtes Drehrohr 12, das während des Betriebs kontinuierlich rotiert. In dem Drehofen 10 wird das Rohmehl zu Zementklinker gebrannt.

Zur Abkühlung ist ein Klinkerkühler 40, beispielsweise ein Rostkühler, vorgesehen, in dem der Klinker mit extern zugeführter Luft auf eine handhabbare Temperatur abgekühlt wird (sogenannter Kaltklinker). Die Abluft aus dem Klinkerkühler 40 wird zum einem Teil als sogenannte Sekundärluft in dem Drehofen 10 verwendet und zu einem anderen Teil über eine Leitung 41 abgeführt. Die Sekundärluft strömt gegebenenfalls koaxial zum Brenner 11 in den Drehofen 10.

Zur Kühlung und Reinigung des Abluftstroms der Vorwärmeinheit ist eine Kühleinheit 50, z.B. in Form eines Verdampfungskühlers, vorgesehen. Die abgekühlte Abluft der Kühleinheit 50 sowie der Abluftstrom des Klinkerkühlers 40 werden mittels einer Entstaubungseinheit 60, z.B. unter Verwendung von Elektrofiltern, entstaubt, und verlassen über einen Schlot 70 die Anlage 100.

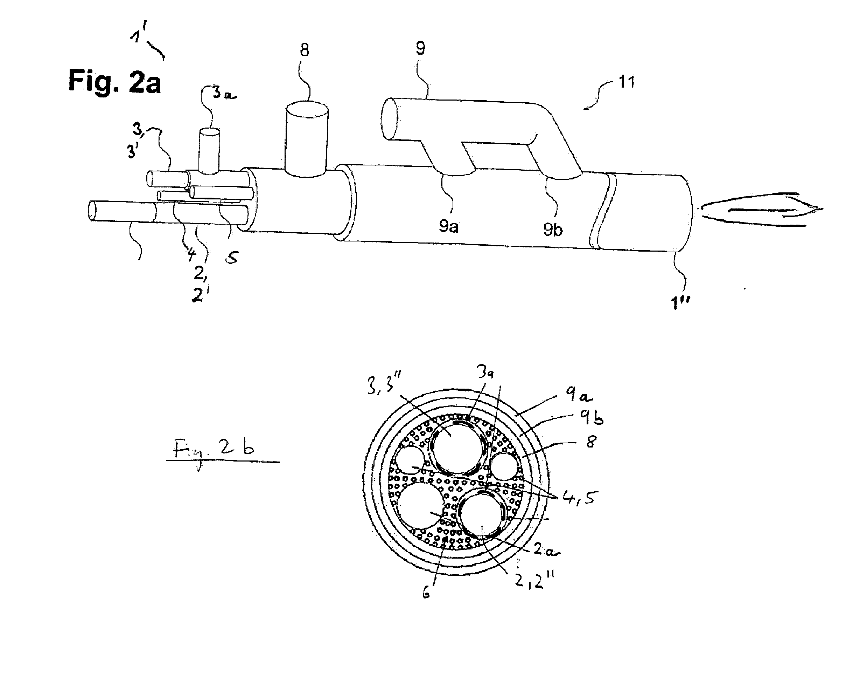

In den Figuren 2a und 2b ist ein Brenner 11 für einen Drehrohrofen 10, der erfindungsgemäß betrieben werden kann, stark schematisiert dargestellt. Die nachfolgende Darstellung der einzelnen Zuleitungen und Brennerkanäle ist rein beispielhaft und nicht einschränkend. Brenner 11 für Drehrohröfen 10 können unterschiedlich konfiguriert und zum Betrieb mit unterschiedlichsten Brennstoffen eingerichtet sein. Hierbei können Zuleitungen und Kanäle für einen oder mehrere feste, flüssige oder gasförmige Brennstoffe vorgesehen sein. Diese können jeweils mit Luft gefördert, transportiert und/oder zerstäubt werden, wozu entsprechende Anschlüsse und/oder koaxiale Leitungen vorgesehen sein können. Die Luftkanäle können dabei auch über unterschiedlich konfigurierte Leit- und/oder Drallkörper verfügen, mittels welcher bei koaxialer Anordnung ein die entstehende Flamme einhüllender Luftstrom erzeugt werden kann. Die Flamme kann durch einen einhüllenden, rotierenden Luftstrom in axial rotierende Bewegung gesetzt und damit stabilisiert werden.

In dem dargestellten Beispiel verfügt der Brenner 11, der in Figur 2a in Seitenansicht verkürzt dargestellt ist, über einen langgestreckten Grundkörper 1 mit einem ersten Ende 1' und einem zweiten, kopfseitigen Ende 1 ". Der Grundkörper 1 weist beispielsweise eine Länge von 10 m auf und ragt mit seinem kopfseitigen Ende 1" in den Drehrohrofen. Am kopfseitigen (zweiten) Ende 1" kann im Betrieb eine Flamme mit mehreren Metern Länge erzeugt werden.

Im Grundkörper 1 sind mehrere Leitungen 2 - 9 vorgesehen, die mit entsprechenden Anschlüssen verbunden sind. Hierbei können beispielsweise zwei Leitungen als Sekundärbrennstoffleitung 2, 3 konfiguriert sein. Über die Sekundärbrennstoffleitungen 2, 3 wird dem Brenner Sekundärbrennstoff, z.B. in Form von Kunststoffschnipseln und/oder Tiermehl, zugeführt.

In den Sekundärbrennstoffleitungen 2, 3 kann der Sekundärbrennstoff in Form eines Sekundärbrennstoffstroms mittels einer Brenngases, wie etwa Luft gefördert werden. Koaxial zu den Sekundärbrennstoffleitungen 2, 3 sind Leitungen zum Transport von Brenngas, insbesondere Luft, Sauerstoff oder sauerstoffangereicherter Luft vorgesehen, welche mit 2a bzw. 3a bezeichnet sind. In Figur 2a ist lediglich die Sekundärbrennstoffleitung 3 mit einer derartigen koaxialen Luftfuhr 3a dargestellt. Mittels derartiger koaxialer Brenngasleitungen 2a, 3a kann ein Brenngas, wie etwa Sauerstoff oder mit Sauerstoff angereicherte Luft in der Brennkammer 12 (siehe Figur 1) direkten Kontakt mit dem Sekundärbrennstoff gebracht werden. Somit kann bei einem Brennstoffwechsel die Menge des eingedüsten Brenngases, insbesondere Sauerstoffs, flexibel den veränderten Erfordernissen angepasst werden. Auf bereits in der Brennstoffleitung positionierte Sauerstoffmischer, welche in diffuser Weise bereits mit Sauerstoff angereicherten Brennstoff in die Brennkammer einbringen, kann verzichtet werden. Bevorzugte Ausgestaltungen der zweiten Enden bzw. der Öffnungen der Leitungen 2a, 3a zur Brennkammer hin werden unten unter Bezugnahme auf Figur 2b weiter erläutert.

Weitere Anschlüsse 4, 5 können für den Betrieb mit weiteren Sekundärbrennstoffen, beispielsweise Lösemittelabfällen, Tiermehl, Klärschlamm und dergleichen eingerichtet sein. Einer der Anschlüsse 4, 5 kann auch zur Bereitstellung einer Pilotflamme zum Zünden des Brenners eingerichtet sein.

Ein Grund- oder Primärbrennstoff, beispielsweise Kohlestaub, kann z.B. über eine Leitung 8 unter Verwendung eines entsprechenden Förderluftstroms in den Brenner eingeblasen werden. Weitere Luftanschlüsse 9 bzw. 9a und 9b können zum Einblasen sogenannter Axial- und Radial- bzw. Drallluft verwendet werden, die die sich bildende Flamme einhüllen. Durch Drallluft kann eine Drehbewegung in der Flamme induziert werden, die diese stabilisiert und/oder für ausreichenden Sauerstoff sorgt.

In der Figur 2b ist eine Draufsicht auf das kopfseitige bzw. zweite Ende 1" des Brenners 11 schematisch dargestellt. Die Axial- und Drallluftanschlüsse 9a und 9b münden, wie ersichtlich, koaxial zu der ringförmig ausgebildeten Primärbrennstoffleitung 8 in die Brennkammer. In den Kanälen 9a und 9b können (nicht dargestellte) Luftleitelemente und Drallkörper vorgesehen sein, die beispielsweise schräg in den Kanälen angeordnet sein können und eine entsprechende Drallbewegung induzieren. Ferner können sogenannte Zusatzluftöffnungen 6 vorgesehen sein, die eine Einbringung zusätzlicher Luft in die Brennzone ermöglichen können. Zusätzlich können sogenannte Lösemittellanzen mit diesen zugeordneten Luftkanälen sowie Pilotbrenner zur Zündung vorgesehen sein. **[Kann auf diese Zusatzluftöffnung vorliegend nicht verzichtet werden?]**

In Figur 2b sind insbesondere die Stirnseiten bzw. zweiten Enden der Sekundärbrennstoffleitungen 2, 3 dargestellt. Man erkennt, dass die zugehörigen Brenngasleitungen 2a, 3a innerhalb der Wandungen der Sekundärbrennstoffleitungen angeordnet sind, und diese koaxial umgeben. Die Öffnungen der Brenngasleitungen 2a, 3a zur Brennkammer hin können als Brenngasdüsen, insbesondere als Hochgeschwindigkeitsdüsen mit tangentialer Ausrichtung zum Brennstoffstrom (welcher durch die Sekundärbrennstoffleitungen 2, 3 in die Brennkammer eintritt) ausgebildet sein. Es ist ebenfalls möglich, die Öffnungen der Brenngasleitungen als Düsen in Schlitzform oder mit radialer Austrittsöffnung zur Erzeugung eines Dralls auszuführen, womit eine intensivere Vermischung mit dem durch die Sekundärbrennstoffleitung 2, 3 in die Brennkammer eintretenden Sekundärbrennstoff möglich ist.

Es ist ebenfalls möglich, die einzelnen Öffnungen der Brenngasleitungen 2a, 3a miteinander zu verbinden, so dass sich insgesamt ein Ringspalt um die jeweilige Sekundärbrennstoffleitung 2, 3 ergibt. Mittels eines derartigen Ringspalts ist ebenfalls ein tangentiales Ausströmen bzw. durch den Einbau von Leitblechen ein radiales Ausströmen zur Erzeugung eines Dralls möglich.

Es ist besonders bevorzugt, dass die Brenngasleitungen 2a, 3a bzw. deren Öffnungen in der Stirnseite der Sekundärbrennstoffleitungen im unteren Bereich der Sekundärbrennstoffleitungen 2, 3 vorgesehen sind (in Figur 2b mittels geschweifter Klammern angedeutet). Mit dieser Maßnahme kann beispielsweise der eingedüste Sauerstoff als Tragluft verwendet werden, wodurch die Flugbahn der Sekundärbrennstoffe in der Brennkammer verlängert wird. Auch wird die Verweilzeit von Feststoffpartikeln in der Brennerflamme verlängert, womit der Ausbrand verbessert werden kann.

## Patentansprüche

1. Brenner, der zur Befeuerung mit wenigstens einem Sekundärbrennstoffstrom eingerichtet ist, und wenigstens eine Sekundärbrennstoffleitung (2, 3) mit einem ersten Ende (2', 3") und einem zweiten Ende (2", 3") aufweist, wobei an dem ersten Ende (2', 3') der Sekundärbrennstoffstrom in die Sekundärbrennstoffleitung (2, 3) eintritt, und an dem zweiten Ende (2", 3") der Sekundärbrennstoffstrom in eine Brennkammer austritt,
**dadurch gekennzeichnet, dass** in oder an der Sekundärbrennstoffleitung (2, 3) wenigstens eine Leitung (2a, 3a) zum Transport von Brenngas, insbesondere Luft, Sauerstoff oder sauerstoffangereichter Luft ausgebildet ist, welche im Bereich des zweiten Endes (2", 3") der Sekundärbrennstoffleitung (2, 3) wenigstens eine Öffnung aufweist, über welche Brenngas in die Brennkammer einbringbar ist.

2. Brenner nach Anspruch 1, **dadurch gekennzeichnet, dass** das zweite Ende (2", 3") der wenigstens einen Sekundärbrennstoffleitung (2, 3) und der wenigstens einen Leitung (2a, 3a) zum Transport von Brenngas so ausgebildet sind, dass Brenngas im Brennraum in direkten Kontakt mit dem Sekundärbrennstoff bringbar ist.

3. Brenner nach einem der vorstehenden Ansprüche, **dadurch gekennzeichnet, dass** das zweite Ende der wenigstens einen Brenngasleitung (2a, 3a) als Düse oder Schlitz oder Ringspalt, welche bzw. welcher insbesondere in der zur Brennkammer hin ausgerichteten Stirnseite der Sekundärbrennstoffleitung (2, 3) vorgesehen ist, ausgebildet ist.

4. Brenner nach einem der vorstehenden Ansprüche, **dadurch gekennzeichnet, dass** das zweite Ende der wenigstens einen Brenngasleitung (2a, 3a) so ausgerichtet ist, dass ein aus ihr austretender Brenngasstrom tangential oder radial verdrallt bezüglich der Richtung des aus dem zweiten Ende der Sekundärbrennstoffleitung (2, 3) austretenden Brennstoffstromes ist.

5. Brenner nach einem der vorstehenden Ansprüche, **dadurch gekennzeichnet, dass** das zweite Ende der wenigstens einen Brenngasleitung (2a, 3a) als Düse zur Bereitstellung einer Austrittsgeschwindigkeit für Brenngas, insbesondere Sauerstoff, im Bereich von 20 m/s bis 600 m/s, vorzugsweise 100 m/s bis 300 m/s mit tangentialer Ausrichtung zum Brennstoffstrom und/oder unter einem Winkel von bis zu 30° in Richtung des Brennstoffstromes geneigt, und/oder radial um bis zu 45° zum Brennstoffstrom gedreht, ausgebildet ist.

6. Brenner nach einem der Ansprüche 1-4, **dadurch gekennzeichnet, dass** das zweite Ende der wenigstens einen Brenngasleitung (2a, 3a) mit Düsen in Schlitzform mit Austrittsgeschwindigkeiten für Brenngas, insbesondere Sauerstoff im Bereich von 20 m/s bis 300 m/s, vorzugsweise im Bereich 30 m/s bis 100 m/s mit tangentialer Ausrichtung zum Brennstoffstrom, oder mit zusätzlich um bis zu 30° nach innen geneigter und/oder radialer Austrittsrichtung zur Erzeugung eines Dralls des Brenngasstroms ausgebildet ist.

7. Brenner nach einem der vorstehenden Ansprüche 1-4, **dadurch gekennzeichnet, dass** das zweite Ende der wenigstens einen Brenngasleitung (2a, 3a) als Ringspalt zur Bereitstellung von Austrittsgeschwindigkeiten für Brenngas im Bereich von 10 m/s bis 100 m/s, vorzugsweise im Bereich von 20 m/s bis 60 m/s ausgebildet ist.

8. Brenner nach einem der vorstehenden Ansprüche, **dadurch gekennzeichnet, dass** das zweite Ende der wenigstens einen Brenngasleitung (2a, 3a) im Bodenbereich (2, 3) der Sekundärbrennstoffleitung ausgebildet ist.

9. Drehrohrofen mit einem Brenner nach einem der vorstehenden Ansprüche.
